# EUROPEAN PATENT SPECIFICATION

(11) **EP 4 763 619 B1**
(45) Date of publication and mention of the grant of the patent: **02.12.2026**
(21) Application number: 24222987.0
(22) Date of filing: 23.12.2024
(51) Int. Cl.: B60Q 1/28, B60K 11/08, B60R 19/52, F21S 43/14, F21S 43/239, F21S 43/245, F21S 43/249, F21S 43/20, F21S 43/31, F21S 43/40, F21S 45/00, F21S 43/50

(54) **ILLUMINABLE GRILLE VANE FOR A VEHICLE, ACTIVE GRILLE SHUTTER AND METHOD FOR CREATING AN ILLUMINABLE GRILLE VANE**
BELEUCHTBARE KÜHLERGRILLKLAPPE FÜR EIN FAHRZEUG, AKTIVE KÜHLERGRILLBLENDE UND VERFAHREN ZUR ERZEUGUNG EINER BELEUCHTBAREN KÜHLERGRILLKLAPPE
AUBE DE GRILLE ÉCLAIRABLE POUR UN VÉHICULE, OBTURATEUR DE GRILLE ACTIF ET PROCÉDÉ DE FABRICATION D'UNE AUBE DE GRILLE ÉCLAIRABLE

(43) Date of publication of application: 24.06.2026
(73) Proprietor: Röchling Automotive SE, 68165 Mannheim (DE)
(72) Inventor: Li, Harry, 215347 Kunshan Jiangsu (CN); Sun, Coker, 215347 Kunshan Jiangsu (CN); Dahl, Erik, 64285 Darmstadt (DE); Ditjo, Paul, 74850 Schefflenz (DE); Bauer, Tobias, 64295 Darmstadt (DE)
(74) Representative: Ullrich & Naumann PartG mbB

(56) References cited:
- EP-B1- 3 190 006
- CN-A- 113 685 773
- CN-A- 117 068 038
- CN-U- 221 035 374
- DE-A1- 102009 039 038
- JP-B2- 7 183 979
- US-A1- 2020 023 728
- US-A1- 2021 095 830

## Description

The invention relates to an illuminable grille vane for a vehicle, particularly for an active grille shutter of a vehicle.

The invention further relates to an active grille shutter for a vehicle.

Moreover, the invention relates to a method for creating an illuminable grille vane.

Although applicable to any kind of illuminable grille vane, the present invention will be described with regard to an illuminable grille vane for an active grille shutter of a vehicle.

Known illuminable grille vanes are grille vanes of an active grille shutter comprising a light guide and a light receiving area. The light receiving area can be coupled with a lighting mechanism outside of the grille vane, such that light can be emitted by the lighting mechanism into the light guide. Thereby, the grille vane is illuminated.

A disadvantage of such a design is that the mechanism is susceptible to failure, because the light mechanism is positioned outside of the grille vane and requires a rotating device, in order to rotate the light mechanism, if the grille vane is rotated.

Another illuminable grille vane is known from EP 4 393 774 A1. This grille vane comprises an LED which is positioned below a light guide, which in turn is covered partially by an opaque closing element. The LED, the light guide and the closing element are all part of the grille vane. The light can emit from the light guide only in areas, where the light guide is not covered by the closing element. The closing element is utilized in guiding air when the grille vane is rotated.

One of the disadvantages however, is that the closing element limits the amount of light emitting from the light guide, as the distance between the closing element and the LED is large relative to the thickness of the grille vane and because the closing element only allows to cover a large amount of the light guide.

Another disadvantage is that the LED is positioned in a central location of the grille vane. As the LED is positioned centrally within the grille vane, the masking of the LED - which in EP 4 393 774 A1 is performed by the closing element - has to cover the central and therefore most visible part of the grille vane.

Furthermore, one disadvantage is, that the grille vane is difficult to manufacture and the manufacturing is expensive.

An Illuminable grille vane for a vehicle according to the preamble of claim 1 is known from CN 113 685 773 A.

One of the objectives of the present invention is therefore to provide an illuminable grille vane and an active shutter grille that have a big illuminable surface area. Another objective is to provide a grille vane and an active shutter grille that can be equipped with a variety of different designs of the emitted light. Furthermore, an objective of the present invention is to provide an easy method for providing a costeffective illuminable grille vane.

A further objective of the present invention is to provide an alternative illuminable grille vane, an alternative active shutter grille and an alternative method for providing an illuminable grille vane.

In an embodiment, the present invention may solve at least one of the objectives with an illuminable grille vane for a vehicle, particularly for an active grille shutter of a vehicle, comprising a vane body, a cover and a lighting module, wherein said lighting module comprises a light guide element, a circuit board and a lighting element, wherein the lighting module is connected to the vane body, wherein the cover is connected to the vane body and encloses the lighting module, characterized in that a decorative layer is provided between the lighting module and the cover and optionally a further decorative layer is provided integral with the cover, wherein the decorative layer comprises at least one opaque area and at least one translucent area, wherein the decorative layer is printed on a diffusive film, and wherein the diffusive film is attached on the light guide element.

In an embodiment, the present invention may solve at least one of the objectives with an illuminable grille vane for a vehicle, particularly for an active grille shutter of a vehicle, comprising a vane body, a cover and a lighting module, wherein said lighting module comprises a light guide element, a circuit board and a lighting element, wherein the lighting module is connected to the vane body, wherein the cover is connected to the vane body and encloses the lighting module, characterized in that the light guide element is planar with a connecting side which is oriented towards the vane body, a light emitting side which is oriented towards the cover and opposite to the connecting side and a light receiving side which is positioned adjacent to the light emitting side and the connecting side, wherein the lighting element is configured to emit light into the light receiving side.

In an embodiment, the present invention may solve at least one of the objectives by an active grille shutter for a vehicle, comprising at least one illuminable grille vane according to one of the claims 1 to 12 and a rotating device configured to rotate the at least one illuminable grille vane.

In an embodiment, the present invention may solve at least one of the objectives by a method for creating an illuminable grille vane according to one of the claims 1 to 12, comprising the steps of:
- Connecting, preferably by welding, a lighting element, a circuit board and preferably a connecting element to create a lighting module;
- Inserting the lighting module in a vane body and attaching them, preferably by injecting molding, to form a vane support device;
- Combining the vane support device with a cover to create the illuminable grille vane, preferably by ultrasonic welding.

The term 'lighting element' is to be understood in its broadest sense and relates especially in the description, preferably in the claims, to an element, that is able to emit light. For example, the lighting element may comprise one or more light emitting elements, for instance LEDs, one or more lights and/or one or more fluorescent areas.

The term 'decorative layer' is to be understood in its broadest sense and relates especially in the description, preferably in the claims, to a layer and/or area, which comprises at least a first area, which is substantially opaque and at least a second area which is substantially translucent, preferably transparent. The decorative layer can be integrated within the cover or the light guide element or can be provided in the form of a separate layer. Preferably, the decorative layer is able to block light emitting from the lighting module with the opaque area and is able to let light emitting from the lighting module pass with the translucent area.

One of the advantages may be that the light emitting from the lighting modules can be masked and/or let through according to a user's desire. Another advantage is that the distance between the masking element - specifically the decorative layer - and the lighting module can be reduced, which enables a smaller masking of the grille vane. Another advantage may be that lighting module can be positioned at an outer area of the grille vane, thereby increasing the usable illuminable area.

Further features, advantages and preferred embodiments are disclosed or may become apparent in the following. Specifically, all of the aforementioned embodiments can be combined in any combination with the teaching of any of the embodiments listed below and/or any other of the aforementioned embodiments.

According to a preferred embodiment of the invention, the decorative layer is integrated with the cover by film injection molding and/or printed on a surface of the cover. Preferably, the decorative layer can be printed on an inside surface of the cover and/or attached to an outside surface by film injection molding. An advantage of this is that the decorative layer can be easily applied to the cover. Another advantage is that the decorative layer is protected from external effects, e.g. weather effects. On top of that, an advantage may be that different and specifically complex designs of emitted light and light effects may be easily realized within the grille vane.

According to the invention, the decorative layer is printed on a diffusive film, wherein the diffusive film is attached on the light guide element. The diffusive film is positioned between the light guide element and the cover. It is also possible that the diffusive film is positioned between the light guide element and the lighting module, what is however not part of the invention. The film may not be bonded to the light guide; it may simply be positioned over the light guide and/or in the vicinity of the light guide. This solution is however also not part of the invention.

An advantage of this is that a modular design of the light vane with different designs can be realized.

According to a further preferred embodiment of the invention, the light guide element is a waveguide with a structured volume and/or surface and/or additives for redirection of light. An advantage of this is that a light guide element can be produced inexpensively. Another advantage may be that the guiding of light within the light guide element can be easily controlled.

According to a further preferred embodiment of the invention, the light guide element is planar with a connecting side, which is oriented towards the vane body, a light emitting side, which is oriented towards the cover and opposite to the connecting side and a light receiving side, which is positioned adjacent to the light emitting side and the connecting side, wherein the lighting element is configured to emit light into the light receiving side. In other words, the lighting module is positioned at a side of the light guide element. Preferably, the lighting module emits light into the light guide into a first direction which is perpendicular to a light emitting direction of the grille vane. An advantage of this is that the lighting module is positioned at a side region of the grille vane and thereby only the side regions of the grille vane have to be masked. Another advantage of this is that the grille vane needs less space and can therefore be thinner.

According to a further preferred embodiment of the invention, the cover comprises a translucent material, preferably polycarbonate and/or polymethylmethacrylate, and/or a coating, preferably polyurethane. An advantage of this may be that the cover can be inexpensively produced. Another advantage may be that the cover may have a high mechanical stability.

According to a further preferred embodiment of the invention, the cover is substantially u-shaped with a planar light emitting region and at least two side beams, wherein the side beams are connected to the vane body, preferably by gluing. An advantage of this may be that the cover can completely seal off the lighting module and/or the light guide element, thereby protecting them from outside influences. Another advantage may be that the cover can be illuminated over a wide surface area. Moreover, an advantage may be that the grille vane has a high stiffness.

According to a further preferred embodiment of the invention, at least one, preferably all, of the side beams are connected to protrusions on the vane body. An advantage of this may be that the cover can be securely and fluid-tightly attached to the vane body.

According to a further preferred embodiment of the invention, the vane body comprises a recess, wherein the circuit board is positioned in the recess, preferably on holding pins extending from the recess. An advantage of this is that the grille vane requires less space and can therefore be produced thinner. Another advantage is that the lighting module can be placed suspended within the grille vane, thereby reducing the possibility that a liquid inside the grille vane may damage the lighting module.

According to a further preferred embodiment of the invention, a reflective layer is provided between the light guide element and the vane body. An advantage of this may be that the brightness of the illuminable grille vane may be increased. Alternatively or additionally, the vane body can comprise or be made of a reflective material.

According to a further preferred embodiment of the invention, a connecting element is provided on the lighting module, configured for providing an electrical connection to the lighting module, wherein the connecting element is a rotating plug and/or comprises a spiral spring and/or is pivotably mounted within a second recess of the vane body. An advantage of this is that during a rotation of the grille vane the physical stress on the connecting element can be reduced. Another advantage is that during rotation of the grille vane a cable connecting to the connecting element may be positioned in a fixed position, reducing the wear on the connecting element.

According to a further preferred embodiment of the invention, the lighting module is covered by an optically transparent potting material. Specifically, the optically transparent potting material may be overmolded over the lighting module. Preferably, the transparent potting material can be part of the light guide element of the lighting module. An advantage of this may be that the lighting module can be tightly sealed from outside influences.

According to a further preferred embodiment of the invention, the vane body is an extruded vane body, preferably with at least one guide element for receiving the vane support device. An advantage of this may be that the vane body can be produced easily and cost effective.

There are several ways how to design and further develop the teaching of the present invention in an advantageous way. To this end, it is to be referred to the patent claims subordinate to the independent patent claims on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained.

In the drawings
- Fig. 1: shows an illuminable grille vane according to an embodiment of the invention;
- Fig. 2: the illuminable grille vane according to figure 1 in a top view;
- Fig. 3: a connector of an illuminable grille vane according to an embodiment of the invention;
- Fig. 4: an active grille shutter according to an embodiment of the invention;
- Fig. 5: steps of a method according to an embodiment of the invention;

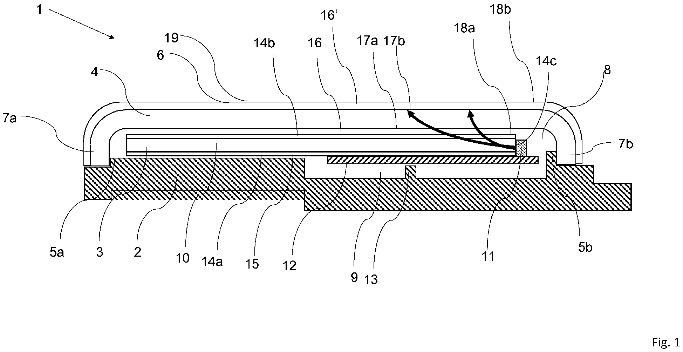

Figure 1 shows an illuminable grille vane according to an embodiment of the invention.

The illuminable grille vane 1 comprises a vane body 2, a lighting module 3 and a cover 4. The vane body 2 is substantially planar and forms the basis of the illuminable grille vane 1 and comprises two protrusions 5a, 5b onto which the cover 4 is glued. The cover 4 itself has a U-formed cross section with a substantially planar light emitting area 6 and two side beams 7a, 7b which are positioned at opposite ends of the light emitting area 6 and extend perpendicular from the light emitting area 6. The side beams 7a, 7b are connected to the protrusions 5a, 5b thereby creating a hollow or inner space 8 between the vane body 2 and the cover 4. Within this hollow space 8 the lighting module 3 is positioned, wherein the lighting module 3 comprises a light guide element 10, a lighting element 11 - here in the form of multiple LEDs - and a circuit board 12 - here in the form of a printed circuit board (PCB). Specifically, the LEDs 11 can be in the form of RGB LEDs, capable of providing light in different colors. For example, a number of LEDs between 10 and 100, preferably between 20 and 50 and even more preferably between 25 and 40 can be used per grille vane.

The PCB 12 is positioned within a recess 9 of the vane body 2 and is suspended or supported within the recess 9 by at least one pin 13. The lighting elements 11 can be controlled by the PCB 12 to emit light into the light guide element 10, which is then redirected by the light guide element 10 through the cover 4. The light guide element 10 can be for example a waveguide, which is overmolded onto the PCB 12 and the lighting elements 11. Specifically, the light guide element 10 comprises three sides. A connecting side 14a, which is oriented towards the vane body 2, a light emitting side 14b, which is oriented towards the cover 4 and is opposite to the connecting side 14a and a light receiving side 14c which is perpendicular to the connecting side 14a and the light emitting side 14b. The lighting elements 11 are positioned next to the light receiving side 14c, in order to emit light into the light receiving side 14c. It is also possible that the light guide element 10 comprises a fourth side which is opposite the light receiving side and which is a second light receiving side. In that case, the lighting module can comprise a second set of lighting elements (not shown in figure 1) which are positioned opposite to the lighting elements 11, such that light can be emitted into the light guide element 10 from two different, preferably opposing, sides (in figure 1 from the left and from the right side).

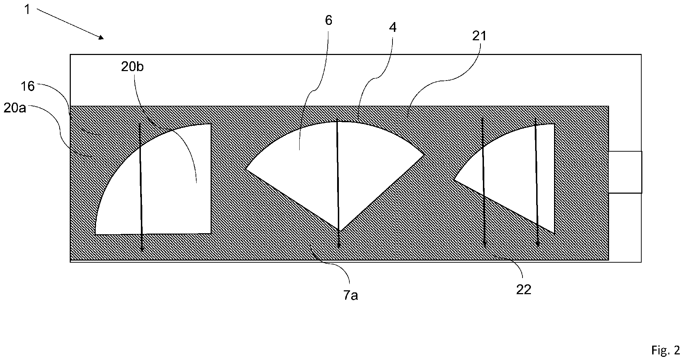

On the connecting side 14a a reflective film 15 is positioned, which is designed to redirect light emitted from the light guide element 10 back into the light guide element 10. Furthermore, a decorative layer 16 is positioned on the light emitting side 14b. The decorative layer 16 is printed on a diffusive film. It is also feasible, that the decorative layer 16 is printed or attached to the cover 4, specifically an inner surface 17a of the cover 4 oriented towards the light guide element 10 and/or an outer surface 17b of the cover 4 oriented away from the light guide element 10 - in figure 1 a decorative layer 16 is shown on the light emitting side 14b and a decorative layer 16' is shown on the outer surface 17b of the cover 4. The decorative layer 16 comprises opaque areas for stopping light from the light guide element 10 in some areas and translucent areas for letting light from the light guide element 10 pass through in other areas. This is best seen in figure 2.

Some parts of the illuminable grille vane 1 can be masked. In this context "masked" means that an area of the light guide 10 and/or of the cover 4 is covered by the opaque area of the decorative layer 16. This is because a user looking onto the illuminable guide vane 1 could experience the lighting elements 10 as unpleasant bright spots if he were to look directly into them. Therefore, in order to avoid this, the areas where it is possible to look directly into the lighting elements 11 can be masked. Due to the fact, that the lighting elements 11 are positioned at an outer edge of the illuminable grille vane 1, only the outer regions 18a of the light guide element 10 and/or the outer regions 18b of the cover 4 have to be masked.

The cover 4 can be made from a translucent and/or transparent material, in order to allow light emitted from the light guide element 10 to pass through the cover. Moreover, the cover 4 comprise a protective layer 19, specifically a scratch resistant coating to protect the cover 4 from outside effects.

The vane body 2 may comprise polyamid, polypropylene and/or polycarbonate. The cover 4 may comprise translucent polycarbonate and/or polymethmethylacrylate. The protective 19 layer may comprise polyurethane and the light guide element may comprise polymethmethylacrylate, polycarbonate and/or polyurethane.

Figure 2 shows the illuminable grille vane according to figure 1 in a top view.

The illuminable grille vane 1 is seen from a top view. The decorative layer 16 comprises first areas 20a which are opaque and second areas 20b which are translucent. Due to the placement of opaque and translucent areas 20a, 20b a light pattern can be displayed on the illuminated grille vane 1. In Figure 2 the light pattern is a plurality of parts of circles, which are positioned next to each other. As shown in figure 2 the translucent area 20b extends along the light emitting planar area 6 of the cover 4 and can extend up to and/or onto one of the side beams 7a. Thereby, the light emitted from the light emitting area 6 can also be emitted sideways, i.e. in a direction parallel to the light emitting area 6. This direction is marked in figure 2 with arrows 22. This allows light to be seen not only, when the illuminable grille vane 1 is directed towards a user, but also when it is rotated.

The lighting elements (not shown in figure 2) are positioned at an upper side 21 of the grille vane 1, in figure 2 on the top side. However, they are masked by the opaque areas 20a, such that they cannot be seen while looking onto the illuminable grille vane 1. Specifically, the lighting elements can be placed along the width of the grille vane, in figure 2 from left to right.

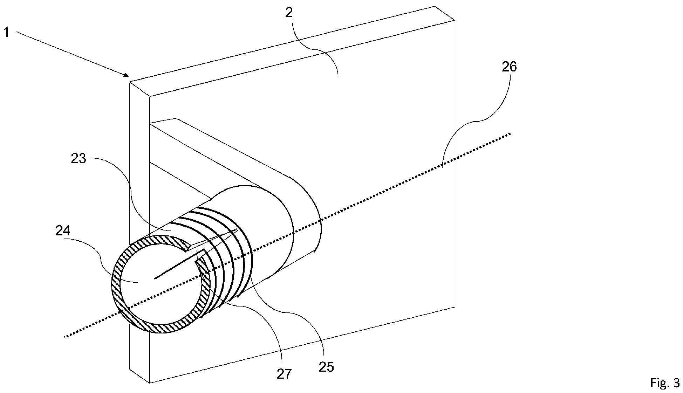

Figure 3 shows a connector of an illuminable grille vane according to an embodiment of the invention.

The illuminable grille vane 1 can correspond to the illuminable grille vane 1 according to figure 1. On the vane body 2 a connector 23 is positioned, wherein the connector 23 comprises an opening 24 to receive a connecting cable 25 which can be connected to the circuit board (not shown in figure 3). The connector 23 is in the form of a hollow cylinder, that extends substantially parallel to the vane body 2 and is positioned offset from the vane body 2. Moreover, the connector 23 can be connected to a rotating device, thereby allowing a rotation of the illuminable grille vane 1 around a rotational axis 26, which extends through the opening 24 of the connector 23. The opening 24 can be sealed by potting material or the like, for example glue, after the connector 23 has been inserted into the opening 24.

The connecting cable 25 can be a flat ribbon cable and can be coiled around the connector 23 in order to reduce the load onto the connecting cable 25 upon rotation of the illuminable grille vane 1. The hollow cylinder may comprise a slit 27 through which the connecting cable 25 is routed into the connector 23.

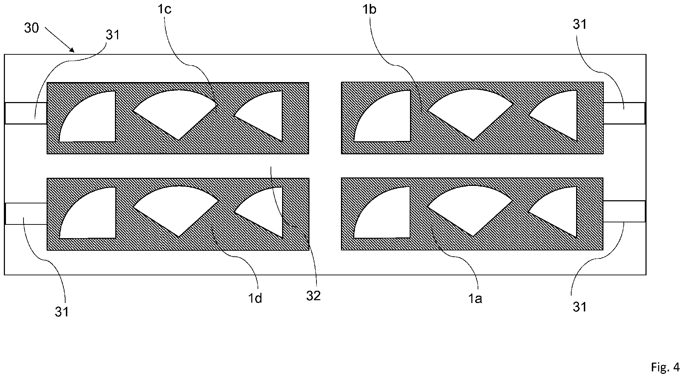

Figure 4 shows an active grille shutter according to an embodiment of the invention.

The active grille shutter 30 comprises several illuminable grille vanes 1a-1d, in figure 4 four illuminable grille vanes 1a-1d are shown. The illuminable grille vanes 1a-1d are positioned within a rotating device 31, which is capable of rotating the illuminable grille vanes 1. Specifically, the rotating device 31 is able to rotate the illuminable grille vanes 1 at least 90°. While the illuminable grille vanes 1 are in the unrotated position shown in figure 4, the illuminable grille vanes 1 close a channel 32 to a motor of a vehicle (not shown). If the illuminable grille vanes 1 are rotated, the channel 32 is opened to the motor of the vehicle, thereby allowing air intake into the motor for cooling and/or combustion.

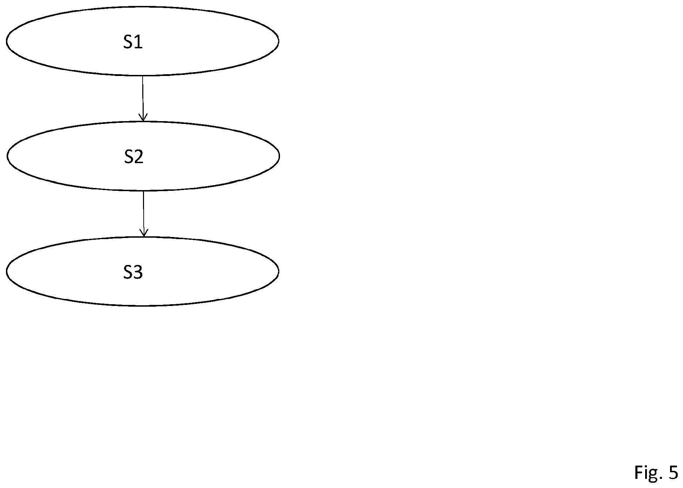

Figure 5 shows steps of a method according to an embodiment of the invention.

The method according to figure 5 is particularly suited for providing an illuminable grille vane.

In a step S1, a lighting module is provided by connecting, preferably welding, a circuit board, a lighting element and preferably a connecting element to create a lighting module. The connecting element may be a light guide element, which can be overmolded over the lighting elements and/or circuit board.

In a further step S2, the lighting module is inserted into a vane body and attached to the vane body, preferably by injecting molding, to form a vane support device. The vane body may be an extruded vane body with guide elements, preferably in the form of protrusions.

In a further step S3, the vane support device is attached to a cover to create the illuminable grille vane, preferably by ultrasonic welding.

At least one embodiment may provide at least one of the following features and/or at least one of the following advantages:
- Large illuminable area of grille vane.
- Modular design.
- Different light patterns.
- High Stiffness.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and is limited only by the appended claims. Although specific terms are employed herein, they are used in a generic and descriptive sense only and not for purposes of limitation.

### List of reference signs

- 1: Illuminable grille vane
- 2: Vane body
- 3: Lighting module
- 4: Cover
- 5a, 5b: Protrusions
- 6: Light emitting area
- 7a, 7b: Side Beams
- 8: Hollow space
- 9: Recess
- 10: Light guide element
- 11: Lighting elements
- 12: Printed circuit board (PCB)
- 13: Pin
- 14a: Connecting side
- 14b: Light emitting side
- 14c: Light receiving side
- 15: Reflective film
- 16: Decorative Layer
- 17a: Inner surface
- 17b: Outer surface
- 18a: Outer region of light guide element
- 18b: Outer region of cover
- 19: Protective Layer
- 20a: Opaque area
- 20b: Translucent area
- 21: Upper side
- 22: Arrows
- 23: Connector
- 24: Opening
- 25: Connecting cable
- 26: Rotational axis
- 27: Slit
- 30: Active grille shutter
- 31: Rotating device
- 32: Channel

## Claims

1. Illuminable grille vane (1) for a vehicle, particularly for an active grille shutter (30) of a vehicle, comprising a vane body (2), a cover (4) and a lighting module (3), wherein said lighting module (3) comprises a light guide element (10), a circuit board (12) and a lighting element (11), wherein the lighting module (3) is connected to the vane body (2), wherein the cover (4) is connected to the vane body (2) and encloses the lighting module, **characterized in that** a decorative layer (16) is provided between the lighting module (3) and the cover (4), and optionally a further decorative layer (16') is provided integral with the cover (4), wherein
the decorative layer (16) comprises at least one opaque area (20a) and at least one translucent area (20b), wherein the decorative layer (16) is printed on a diffusive film, and wherein the diffusive film is attached on the light guide element (10).

2. Illuminable grille vane (1) according to claim 1, **characterized in that** the further decorative layer (16') is integrated with the cover (4) by film injection molding and/or printed on a surface of the cover (4).

3. Illuminable grille vane (1) according to any of claims 1 to 2, **characterized in that** the light guide element (10) is a waveguide with a structured volume and/or surface and/or additives for redirection of light.

4. Illuminable grille vane (1) according to any of claims 1 to 3, **characterized in that** the light guide element (10) is substantially planar with a connecting side (14a), which is oriented towards the vane body (2), a light emitting side (14b), which is oriented towards the cover (4) and opposite to the connecting side (14a) and a light receiving side (14c), which is positioned adjacent to the light emitting side (14b) and the connecting side (14a), wherein the lighting element (11) is configured to emit light into the light receiving side (14c).

5. Illuminable grille vane (1) according to any of claims 1 to 4, **characterized in that** the cover (4) comprises a translucent material, preferably polycarbonate and/or polymethylmethacrylate, and/or a coating, preferably polyurethane.

6. Illuminable grille vane (1) according to any of claims 1 to 5, **characterized in that** the cover (4) is substantially u-shaped with a planar light emitting region (6) and at least two side beams (7a, 7b), wherein the side beams (7a, 7b) are connected to the vane body (2), preferably by gluing.

7. Illuminable grille vane (1) according to claim 6, **characterized in that** at least one, preferably all, of the side (7a, 7b) beams are connected to protrusions (5a, 5b) on the vane body (2).

8. Illuminable grille vane (1) according to any of claims 1 to 7, **characterized in that** the vane body (2) comprises a recess (9), wherein the circuit board (12) is positioned in the recess (9), preferably on holding pins (13) extending from the recess (9).

9. Illuminable grille vane (1) according to any of claims 1 to 8, **characterized in that** a reflective layer (15) is provided between the light guide element (10) and the vane body (2).

10. Illuminable grille vane (1) according to any of claims 1 to 9, **characterized in that** a connecting element (23) is provided on the lighting module (3), configured for providing an electrical connection to the lighting module (3), wherein the connecting element (23) is a rotating plug and/or comprises a spiral spring and/or is pivotably mounted within a second recess of the vane body (2).

11. Illuminable grille vane (1) according to any of claims 1 to 10, **characterized in that** the lighting module (3) is covered by an optically transparent potting material.

12. Active grille shutter (30) for a vehicle, comprising at least one illuminable grille vane (1) according to one of the claims 1 to 11 and a rotating device (31), configured to rotate the at least one illuminable grille vane (1).

13. Method for creating an illuminable grille vane (1) according to one of the claims 1 to 11, comprising the steps of:
- Connecting, preferably by welding, a lighting element (11), a circuit board (12) and preferably a connecting element (23) to create a lighting module (3);
- Inserting the lighting module (3) in a vane body (2) and attaching them, preferably by injecting molding, to form a vane support device;
- Combining the vane support device with a cover (4) to create the illuminable grille vane (1), preferably by ultrasonic welding.

14. Method according to claim 13, **characterized in that** the vane body (2) is an extruded vane body (2), preferably with at least one guide element for receiving the vane support device.

## Patentansprüche

1. Beleuchtbare Kühlergrilllamelle (1) für ein Fahrzeug, insbesondere für eine aktive Kühlergrillklappe
(30) eines Fahrzeugs, umfassend einen Lamellenkörper (2), eine Abdeckung (4) und ein Beleuchtungsmodul (3), wobei das Beleuchtungsmodul (3) ein Lichtleitelement (10), eine Leiterplatte (12) sowie ein Leuchtelement (11) umfasst, wobei das Beleuchtungsmodul (3) mit dem Lamellenkörper (2) verbunden ist, wobei die Abdeckung (4) mit dem Lamellenkörper (2) verbunden ist und das Beleuchtungsmodul umschließt, **dadurch gekennzeichnet, dass** eine Dekorschicht (16) zwischen dem Beleuchtungsmodul (3) und der Abdeckung (4) angeordnet ist, und wobei optional eine weitere Dekorschicht (16') einstückig mit der Abdeckung (4) angeordnet ist, wobei die Dekorschicht (16) mindestens einen undurchsichtigen Bereich (20a) und mindestens einen durchsichtigen Bereich (20b) umfasst, wobei die Dekorschicht (16) auf eine Diffusionsfolie aufgedruckt ist und wobei die Diffusionsfolie auf dem Lichtleitelement (10) angeordnet ist.

2. Beleuchtbare Kühlergrilllamelle (1) nach Anspruch 1, **dadurch gekennzeichnet, dass** die weitere Dekorschicht (16') durch Folienspritzguss in die Abdeckung (4) integriert und/oder auf eine Oberfläche der Abdeckung (4) aufgedruckt ist.

3. Beleuchtbare Kühlergrilllamelle (1) nach einem der Ansprüche 1 bis 2, **dadurch gekennzeichnet, dass** das Lichtleitelement (10) ein Wellenleiter mit strukturiertem Volumen und/oder strukturierter Oberfläche und/oder Additiven zur Umlenkung von Licht ist.

4. Beleuchtbare Kühlergrilllamelle (1) nach einem der Ansprüche 1 bis 3, **dadurch gekennzeichnet, dass** das Lichtleitelement (10) im Wesentlichen eben ist und eine zum Lamellenkörper (2) gerichtete Anschlussseite (14a), eine zur Abdeckung (4) gerichtete und der Anschlussseite (14a) gegenüberliegende Lichtaustrittsseite (14b) sowie eine Lichtempfangsseite (14c) aufweist, die benachbart zur Lichtaustrittsseite (14b) und zur Anschlussseite (14a) angeordnet ist, wobei das Leuchtelement (11) so ausgebildet ist, dass es Licht in die Lichtempfangsseite (14c) emittiert.

5. Beleuchtbare Kühlergrilllamelle (1) nach einem der Ansprüche 1 bis 4, **dadurch gekennzeichnet, dass** die Abdeckung (4) ein lichtdurchlässiges Material, vorzugsweise Polycarbonat und/oder Polymethylmethacrylat, und/oder eine Beschichtung, vorzugsweise Polyurethan, umfasst.

6. Beleuchtbare Kühlergrilllamelle (1) nach einem der Ansprüche 1 bis 5, **dadurch gekennzeichnet, dass** die Abdeckung (4) im Wesentlichen U-förmig ist und einen ebenen Lichtaustrittsbereich (6) sowie mindestens zwei Seitenträger (7a, 7b) aufweist, wobei die Seitenträger (7a, 7b) mit dem Lamellenkörper (2) verbunden sind, vorzugsweise durch Kleben.

7. Beleuchtbare Kühlergrilllamelle (1) nach Anspruch 6, **dadurch gekennzeichnet, dass** mindestens einer, vorzugsweise alle der Seitenträger (7a, 7b) mit Vorsprüngen (5a, 5b) am Lamellenkörper (2) verbunden sind.

8. Beleuchtbare Kühlergrilllamelle (1) nach einem der Ansprüche 1 bis 7, **dadurch gekennzeichnet, dass** der Lamellenkörper (2) eine Aussparung (9) aufweist, wobei die Leiterplatte (12) in der Aussparung (9) angeordnet ist, vorzugsweise auf Haltebolzen (13), die sich aus der Aussparung (9) erstrecken.

9. Beleuchtbare Kühlergrilllamelle (1) nach einem der Ansprüche 1 bis 8, **dadurch gekennzeichnet, dass** zwischen dem Lichtleitelement (10) und dem Lamellenkörper (2) eine reflektierende Schicht (15) vorgesehen ist.

10. Beleuchtbare Kühlergrilllamelle (1) nach einem der Ansprüche 1 bis 9, **dadurch gekennzeichnet, dass** am Beleuchtungsmodul (3) ein Verbindungselement (23) vorgesehen ist, das zur Herstellung einer elektrischen Verbindung mit dem Beleuchtungsmodul (3) ausgebildet ist, wobei das Verbindungselement (23) ein Drehstecker ist und/oder eine Spiralfeder umfasst und/oder schwenkbar in einer zweiten Aussparung des Lamellenkörpers (2) gelagert ist.

11. Beleuchtbare Kühlergrilllamelle (1) nach einem der Ansprüche 1 bis 10, **dadurch gekennzeichnet, dass** das Beleuchtungsmodul (3) von einem optisch transparenten Vergussmaterial ummantelt ist.

12. Aktive Kühlergrillklappe (30) für ein Fahrzeug, umfassend mindestens eine beleuchtbare Kühlergrilllamelle (1) gemäß einem der Ansprüche 1 bis 11 und eine Drehvorrichtung (31), die ausgebildet ist, die mindestens eine beleuchtbare Kühlergrilllamelle (1) zu drehen.

13. Verfahren zur Herstellung einer beleuchtbaren Kühlergrilllamelle (1), insbesondere einer beleuchtbaren Kühlergrilllamelle (1) gemäß einem der Ansprüche 1 bis 11, umfassend die folgenden Schritte:
- Verbinden, vorzugsweise durch Schweißen, eines Beleuchtungselements (11), einer Leiterplatte (12) und vorzugsweise eines Verbindungselements (23) zur Herstellung eines Beleuchtungsmoduls (3);
- Einsetzen des Beleuchtungsmoduls (3) in einen Lamellenkörper (2) und Befestigen derselben, vorzugsweise durch Spritzgießen, zur Bildung einer Lamellenhalterung;
- Kombinieren der Lamellenhalterung mit einer Abdeckung (4), um die beleuchtbare Kühlergrilllamelle (1) zu bilden, vorzugsweise durch Ultraschallschweißen.

14. Verfahren nach Anspruch 13, **dadurch gekennzeichnet, dass** der Lamellenkörper (2) ein stranggepresster Lamellenkörper (2) ist, vorzugsweise mit mindestens einem Führungselement zur Aufnahme der Lamellenhalterung.

## Revendications

1. Ailette de calandre illuminable (1) pour un véhicule, en particulier pour un volet de calandre actif (30) d'un véhicule, comprenant un corps d'ailette (2), un couvercle (4) et un module d'éclairage (3), dans lequel module d'éclairage (3) comprend un élément de guidage de lumière (10), une carte de circuit (12) et un élément d'éclairage (11), dans lequel module d'éclairage (3) est connecté au corps d'ailette (2), dans lequel couvercle (4) est connecté au corps d'ailette (2) et entoure le module d'éclairage, **caractérisée en ce qu'**une couche décorative (16) est prévue entre le module d'éclairage (3) et le couvercle (4), et éventuellement une couche décorative supplémentaire (16') est prévue intégralement avec le couvercle (4),
dans laquelle couche décorative (16) comprend au moins une zone opaque (20a) et au moins une zone translucide (20b), dans laquelle couche décorative (16) est imprimée sur un film diffusant, et dans lequel film diffusant est fixé sur l'élément de guidage de lumière (10).

2. Ailette de calandre illuminable (1) selon la revendication 1, **caractérisée en ce que** la couche décorative supplémentaire (16') est intégrée au couvercle (4) par moulage par injection de film et/ou imprimée sur une surface du couvercle (4).

3. Ailette de calandre illuminable (1) selon l'une quelconque des revendications 1 à 2, **caractérisée en ce que** l'élément de guidage de lumière (10) est un guide d'ondes avec un volume structuré et/ou une surface structurée et/ou des additifs pour la redirection de la lumière.

4. Ailette de calandre illuminable (1) selon l'une quelconque des revendications 1 à 3, **caractérisée en ce que** l'élément de guidage de lumière (10) est essentiellement plan avec un côté de connexion (14a), dans lequel est orienté vers le corps d'ailette (2), un côté d'émission de lumière (14b), dans lequel est orienté vers le couvercle (4) et opposé au côté de connexion (14a), et un côté de réception de lumière (14c), dans lequel est positionné adjacent au côté d'émission de lumière (14b) et au côté de connexion (14a), dans lequel élément d'éclairage (11) est configuré pour émettre de la lumière dans le côté de réception de lumière (14c).

5. Ailette de calandre illuminable (1) selon l'une quelconque des revendications 1 à 4, **caractérisée en ce que** le couvercle (4) comprend un matériau translucide, de préférence du polycarbonate et/ou du polyméthylméthacrylate, et/ou un revêtement, de préférence du polyuréthane.

6. Ailette de calandre illuminable (1) selon l'une quelconque des revendications 1 à 5, **caractérisée en ce que** le couvercle (4) est essentiellement en forme de U avec une région d'émission de lumière plane (6) et au moins deux poutres latérales (7a, 7b), dans lesquelles poutres latérales (7a, 7b) sont connectées au corps d'ailette (2), de préférence par collage.

7. Ailette de calandre illuminable (1) selon la revendication 6, **caractérisée en ce qu'**au moins une, de préférence toutes, des poutres latérales (7a, 7b) sont connectées à des saillies (5a, 5b) sur le corps d'ailette (2).

8. Ailette de calandre illuminable (1) selon l'une quelconque des revendications 1 à 7, **caractérisée en ce que** le corps d'ailette (2) comprend une cavité (9), dans laquelle carte de circuit (12) est positionnée dans la cavité (9), de préférence sur des broches de maintien (13) s'étendant depuis la cavité (9).

9. Ailette de calandre illuminable (1) selon l'une quelconque des revendications 1 à 8, **caractérisée en ce qu'**une couche réfléchissante (15) est prévue entre l'élément de guidage de lumière (10) et le corps d'ailette (2).

10. Ailette de calandre illuminable (1) selon l'une quelconque des revendications 1 à 9, **caractérisée en ce qu'**un élément de connexion (23) est prévu sur le module d'éclairage (3), configuré pour fournir une connexion électrique au module d'éclairage (3), dans lequel élément de connexion (23) est une fiche rotative et/ou comprend un ressort spiral et/ou est monté pivotant dans une seconde cavité du corps d'ailette (2).

11. Ailette de calandre illuminable (1) selon l'une quelconque des revendications 1 à 10, **caractérisée en ce que** le module d'éclairage (3) est recouvert par un matériau d'enrobage optiquement transparent.

12. Volet de calandre actif (30) pour un véhicule, comprenant au moins une ailette de calandre illuminable (1) selon l'une quelconque des revendications 1 à 11 et un dispositif rotatif (31), configuré pour faire tourner au moins une ailette de calandre illuminable (1).

13. Procédé de création d'une ailette de calandre illuminable (1) selon l'une quelconque des revendications 1 à 11, comprenant les étapes suivantes :
Connexion, de préférence par soudage, d'un élément d'éclairage (11), d'une carte de circuit (12) et de préférence d'un élément de connexion (23) pour créer un module d'éclairage (3) ;
Insertion du module d'éclairage (3) dans un corps d'ailette (2) et fixation de ceux-ci, de préférence par moulage par injection, pour former un dispositif de support d'ailette ;
Combinaison du dispositif de support d'ailette avec un couvercle (4) pour créer l'ailette de calandre illuminable (1), de préférence par soudage ultrasonique.

14. Procédé selon la revendication 13, **caractérisé en ce que** le corps d'ailette (2) est un corps d'ailette extrudé (2), de préférence avec au moins un élément de guidage pour recevoir le dispositif de support d'ailette.
